# EUROPEAN PATENT SPECIFICATION

(11) **EP 4 042 236 B1**
(45) Date of publication and mention of the grant of the patent: **01.07.2026**
(21) Application number: 20781073.0
(22) Date of filing: 07.09.2020
(51) Int. Cl.: G02C 5/22

(54) **IMPROVED SPECTACLE FRAME**
VERBESSERTES BRILLENGESTELL
MONTURE DE LUNETTES AMÉLIORÉE

(30) Priority: 06.09.2019 IT 201900015791
(43) Date of publication of application: 17.08.2022
(73) Proprietor: Buricca S.r.l., 52100 Arezzo (IT)
(72) Inventor: BURICCA, Francesco, 52100 Arezzo (IT); BURICCA, Lucio, 52100 Arezzo (IT)
(74) Representative: ip21 Ltd
(86) International application number: PCT/IB2020/058315
(87) International publication number: WO 2021/044392

(56) References cited:
- CN-B- 106 980 184
- CN-U- 204 422 889
- JP-A- H10 284 317
- JP-A- H11 119 166
- US-A1- 2010 309 425
- US-A1- 2012 062 831

## Description

### Technical field

This invention relates to an eyeglasses frame.

More specifically, the invention relates to an eyeglasses frame in which the side bars are removably connected by a hinge system of the magnetic type.

More and more people wear eyeglasses, both for sight and protection, such as, for example, sunglasses.

Since this is an accessory which the user often cannot renounce, the eyeglasses are consequently exposed to a plurality of activities, on both a daily and occasional basis, which can potentially cause damage both to the lenses and to the front frame to which the lenses are connected.

Many people will have taken off their eyeglasses and, for example, sat on them, or rested something heavy on them which is able to deform the structure or, even worse, break it.

Sometimes even simply falling asleep with the eyeglasses on and moving whilst asleep can place them against a rather rigid body which is able to adversely affect their normal shape.

### Background art

A part of the eyeglasses which is often a critical problem consists of the hinges connecting the bars (or arms) to the actual front frame which supports the lenses.

In effect, it is a fundamental part of the frame of the eyeglasses since it must guarantee the possibility of reducing the overall dimensions of the eyeglasses which, in the configuration of use, that is to say, with the bars open, would be extremely awkward to position and bulky to be stored.

At the same time, the above-mentioned hinges must allow an easy folding of the bars but at the same time also maintain a stable opening position, that is to say, when the eyeglasses are worn by the user.

The universally widespread solution for making these hinges comprises two hinge elements which are rotatably engaged and stably connected to each other by means of an extremely small screw, also defining the fulcrum of the hinge.

The drawbacks of these small screws are known to all the users of eyeglasses, since, as well as their threaded part very often not being very durable (leading to the annoying loosening of the hinge joint between the bars and the rest of the front frame of the eyeglasses), are also difficult to handle and replace, making repairs not particularly easy even for professional opticians.

A solution which fully resolves the above-mentioned drawbacks of the frames of eyeglasses with connection of the bars of known type has so far not been found.

For example, patent document US 2010/0309425 teaches the making of magnetic connections between various components of the eyeglasses, including the bars, which are therefore connected to the front frame by a hinge of the magnetic type which allows them to be easily detached once a force greater than that of magnetic attraction is applied between the two magnets used, respectively on the bar and on the front frame of the eyeglasses.

Although the solution just described has partly addressed some of the above-mentioned problems, it has not been seen to be completely free from drawbacks.

The above-mentioned drawbacks include, for example, the fact that in order to guarantee an adequate magnetic connection between the bars and the front frame, the dimensions of the magnets might be not negligible and as such have a negative effect on, or in any case greatly characterise, the design of the eyeglasses.

Another drawback of the solution described above is due to the rubbing of the magnets caused by the opening/closing of the bars of the eyeglasses. In effect, this rubbing causes rapid deterioration of the magnets themselves, which, in particular if made of neodymium, easily tend to break up once the surface protective layer has been consumed, precisely as a result of rubbing.

Yet another drawback, again linked to the deterioration of the magnets, is due to the impacts between the magnets themselves each time they are joined to connect the bars to the front frame. It is often the case that after a certain number of joinings the above-mentioned impacts irreversibly damage the magnets.

### Aim of the invention

The aim of this invention is to provide a frame for eyeglasses which is able to overcome the drawbacks of the prior art and which is at the same time practical to use and simple to make.

A further aim of the invention is to provide an eyeglasses frame which is able to not deteriorate rapidly with use.

According to the invention, these aims and others are achieved by an eyeglasses frame comprising the technical features described in the appended claims.

### Brief description of the drawings

The technical features of the invention, with reference to the above-mentioned aims, are clearly described in the appended claims and its advantages are apparent from the detailed description which follows, with reference to the accompanying drawings which illustrate a nonlimiting example embodiment of the invention and in which:
- Figure 1 is a schematic perspective view of a preferred embodiment of a frame for eyeglasses made in accordance with the invention;
- Figure 1A is a rear schematic perspective view with exploded elements of a detail of the frame of Figure 1;
- Figure 1B is an enlarged view of the circled detail of the component of Figure 1A;
- Figure 2 is a schematic perspective view with exploded elements of a different detail of the frame of Figure 1;
- Figure 2A is an enlarged view of the circled detail of the component of Figure 2;
- Figure 3 is a schematic perspective view from below of the set of components of Figures 1A and 2 with exploded details;
- Figure 3A illustrates the assembly of Figure 3 in an assembled configuration;
- Figure 4 is a schematic perspective rear view of the detail of Figure 1A with the elements assembled, previously shown exploded;
- Figure 4A is an enlarged view of the circled detail of the component of Figure 4;
- Figure 5 is a schematic perspective view of the detail of Figure 2 with the elements assembled, previously shown exploded;
- Figure 5A is an enlarged view of the circled detail of the component of Figure 5;
- Figure 6 is a schematic side elevation view of the trend of the magnetic field resulting from the superposing of two permanent magnets according to the prior art;
- Figure 7 is a schematic side elevation view of the trend of the magnetic field resulting from the superposing of two permanent magnets made according to the invention;
- Figure 8 is a rear schematic perspective view of a detail of a variant embodiment of the eyeglasses frame according to the invention;
- Figures 9 and 10 are respective rear schematic perspective views of two different configurations of a detail of a further variant embodiment of the eyeglasses frame according to the invention.

### Detailed description of preferred embodiments of the invention

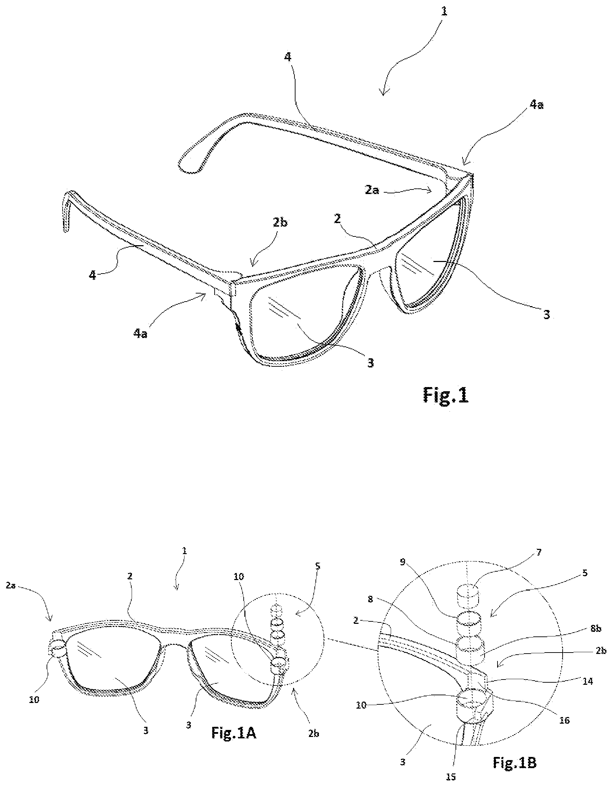

As illustrated in Figure 1, the numeral 1 denotes in its entirety a preferred embodiment of the eyeglasses frame made according to the invention.

The frame 1 comprises a front frame 2 supporting two optical lenses 3 and two bars 4, commonly also called arms, each located at a respective lateral end 2a, 2b of the front frame 2.

The concept of two optical lenses, for the purposes of the invention, is intended to also include the solution, not illustrated, of a single lens which extends continuously until covering the area designed to be captured by both the eyes of the user.

The front frame 2 is advantageously made of plastic material.

The bars 4 are advantageously made of plastic material. Materials alternative to the plastic material for the making of the frame 2 and/or the bars 4 are metals or wood and its derivatives.

For the purpose of connecting the bars 4 to the front frame 2, the frame 1 comprises a first magnetic member 5 supported by the frame 2 and a second magnetic member 6 supported by each bar 4.

The above-mentioned first and second magnetic members 5, 6 are designed to engage mutually with each other as a result of the respective magnetic attraction force to guarantee the rotatable connection of the bars 4 relative to the front frame 2.

Advantageously, the two first and second magnetic members 5, 6 are identical and interchangeable.

The concept of equality just expressed naturally takes into account their reversed polarity in order to generate reciprocal magnetic attraction.

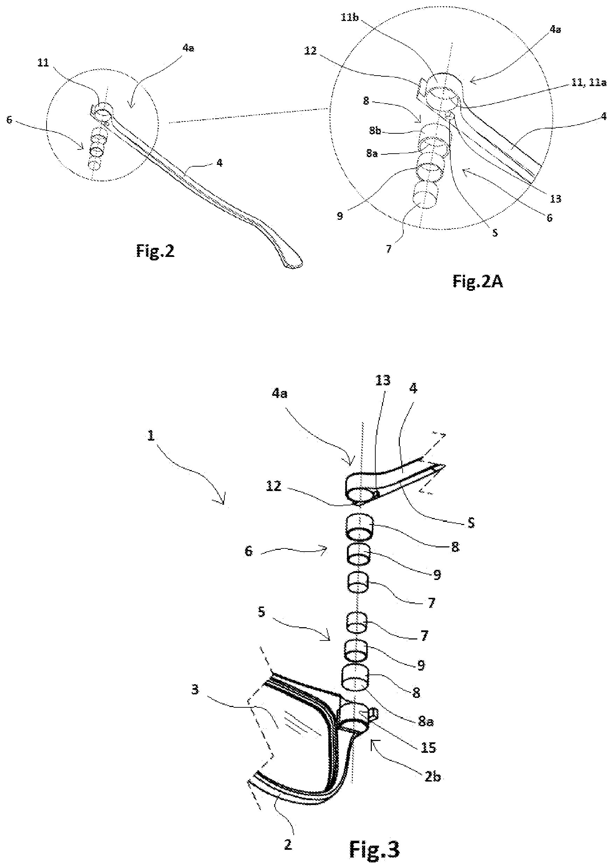

As clearly illustrated in Figures 1B and 2A, each first and second magnetic member 5, 6 comprises an inner cylindrical core 7 made of ferromagnetic material and an outer capsule 8 for containing the inner core 7.

The inner core 7 is advantageously made from one of the alloys of neodymium-iron-boron and samarium-cobalt, due to the favourable ratio which both these alloys have between the magnetic attraction force exerted and the volume of the magnet relative to other ferromagnetic materials.

The outer capsule 8 is made of a material with a high magnetic permeability.

The expression "high magnetic permeability" is used in this description to mean a magnetic permeability whose value is greater than or equal to that of nickel, that is to say, equal to or greater than **1.25 × 10⁻⁴** µ [H/m].

By way of example, the outer capsule 8 is made of steel. The outer capsule 8 is cylindrical in shape and has a bottom wall 8a and a lateral cylindrical wall 8b.

The lateral cylindrical wall 8b has a circumferential end edge 8c.

The outer capsule 8 is configured to coaxially contain, inside it, the inner cylindrical core 7, without it protruding in an axial direction (that is, in the direction of the axis of any of the coaxial cylinders defined by the core 7 or the capsule 8) beyond the above-mentioned circumferential end edge 8c of the lateral cylindrical wall 8b.

Advantageously, the above-mentioned circumferential end edge 8c of the lateral cylindrical wall 8b protrudes axially relative to the maximum axial height of the inner cylindrical core 7.

This limited protrusion is an excellent compromise since, in the assembled frame, it is thus possible to bring the respective inner cores 7 of the two magnetic members 5, 6 practically into contact, thereby maximising the magnetic attraction force exerted between them, but at the same time preventing, during the rotation of the magnetic members 5, 6 connected to the movement of the bars 4, the two inner cores 7 from breaking up, wearing, as described in more detail below. Further, the above-mentioned protrusion also prevents the impact which would occur between the inner cylindrical cores 7 of the two magnetic members 5, 6 each time the connection between the bars 4 and the front frame 2 occurs, which, as mentioned above, is able to damage the integrity of the inner cylindrical cores 7.

The above-mentioned projection, made in both the above-mentioned magnetic members 5, 6 determines, in use, a mutual distance between the two respective inner cores 7. The distance is between 0.01 mm and 0.6 mm.

Still more advantageously, in use, the above-mentioned distance between the respective cores of the magnetic members 5, 6 is between 0.05 mm and 0.4 mm.

Experimental tests have shown that an optimum value of this distance is approximately 0.15 mm.

Again with reference to Figures 1B and 2A, each of the above-mentioned first and second magnetic members 5, 6 comprises a respective sleeve 9 for covering the inner core.

The covering sleeve 9 is interposed between the inner cylindrical core 7 and the outer capsule 8.

Advantageously, the covering sleeve 9 has a thickness of between 0.05 mm and 0.4 mm.

This thickness is to be considered in a diametric direction, that is to say, according to any diameter of the inner cylindrical core 7 or of the outer coaxial capsule 8.

Still more advantageously, the covering sleeve 9 has a thickness of between 0.1 mm and 0.35 mm.

Experimental tests have shown that an optimum value of this thickness is approximately 0.3 mm.

The covering sleeve 9 is advantageously made of plastic material.

According to a preferred embodiment, the covering sleeve 9 is made of rubbery plastic material melted around the inner core 7.

Alternatively, the covering sleeve 9 is formed by a layer of glue used to stably connect the cylindrical inner core 7 to the outer capsule 8.

Advantageously, the covering sleeve 9 allows the inner core 7 to be stably inserted inside the outer capsule 8. The inner core 7, in particular if it is made of a neodymium-iron-boron alloy, is in fact particularly fragile and tends to break down following even limited surface wear.

The covering sleeve 9 advantageously protects the inner core 7 from impacts and/or abrasions, thus contributing to maintaining its integrity for a long time and increasing its efficiency.

Advantageously, according to a variant embodiment not illustrated in the accompanying drawings, the covering sleeve 9 completely covers the inner cores 7, in such a way as to actively act against the above-mentioned harmful impacts and abrasions between the inner cores 7. The above-mentioned covering sleeve 9, including the covering layer of the respective surfaces facing each other of the two inner cores 7, as well as protecting the cores has the useful function of preventing direct contact of the user with the inner core 7 since this is normally covered with nickel, a metal to which an increasingly greater number of persons are allergic.

As illustrated in Figure 1A, and in more detail in Figure 1B, at each relative lateral end 2a, 2b, the front frame 2 has respective first cylindrical seats 10 for housing respective first magnetic members 5.

With reference to Figures 2 and 2A, at the above-mentioned connecting zone 4a, each bar 4 has a second cylindrical seat 11 for housing the above-mentioned second magnetic member 6.

The above-mentioned second cylindrical seat 11 has an inner cylindrical cavity 11a for housing the second magnetic member 6.

The above-mentioned second cylindrical seat 11 has an outer wall 11b having at least for part of its extension, a cylindrical shape coaxial with the above-mentioned inner cylindrical cavity 11a.

As illustrated in Figure 2A, on each of the two bars 4 there are, at the respective zone 4a for connection to the front frame 2, a first stop element 12 and a second stop element 13.

The two first and second stop elements 12, 13 are separate and spaced from each other.

With reference to Figure 2A, the first stop element 12 protrudes in a fin-like fashion, projecting from the bar 4 tangentially relative to a cylindrical surface defined by the above-mentioned outer wall 11b of the second cylindrical seat 11, the cylindrical surface being coaxial with the inner cylindrical core 7 of the second magnetic member 6.

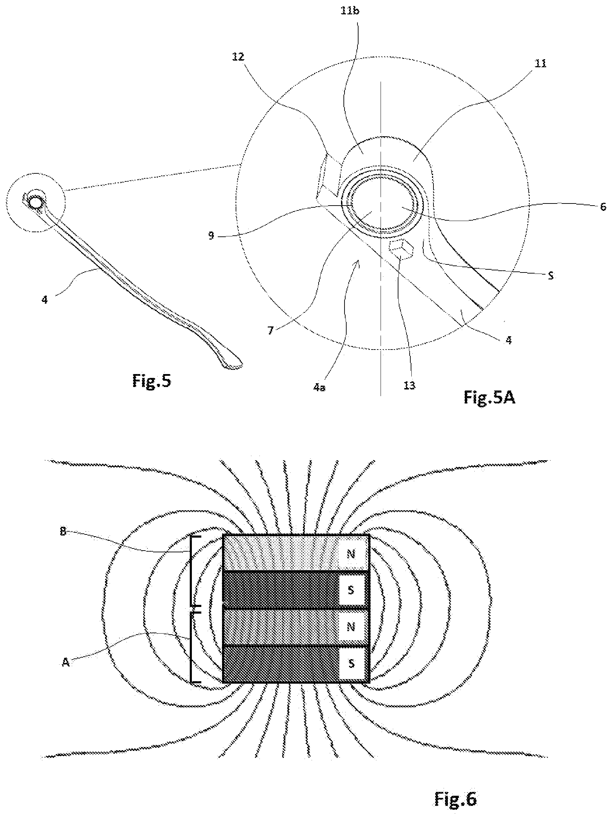

As illustrated in Figure 5A, the above-mentioned second stop element 13 protrudes below the bar 4, in the direction of the axis of the inner cylindrical core 7 of the second magnetic member 6, beyond the overall dimensions of the outer containment capsule.

In other words, the portion 4a of the bar 4 has a substantially flat lower surface S and the second stop element 13 protrudes relative to that surface.

The second stop element 13 is shown in the accompanying drawings purely by way of example in the form of a substantially parallelepiped block but other different shapes may be equivalent to it.

As illustrated in Figure 1B, on the front frame 2 there are, at each of its lateral ends 2a, 2b for engaging with the bars 4, a first stop 14 and a second stop 15.

The first and second stop elements 12, 13 are designed to engage in contact, respectively, with the above-mentioned first and second contact elements 14, 15.

The above-mentioned engagement in contact of the first and second stop elements 12, 13 with the respective first and second contact elements 14, 15, is simultaneous, thereby generating a pair of forces opposing an extra opening of the bars 4.

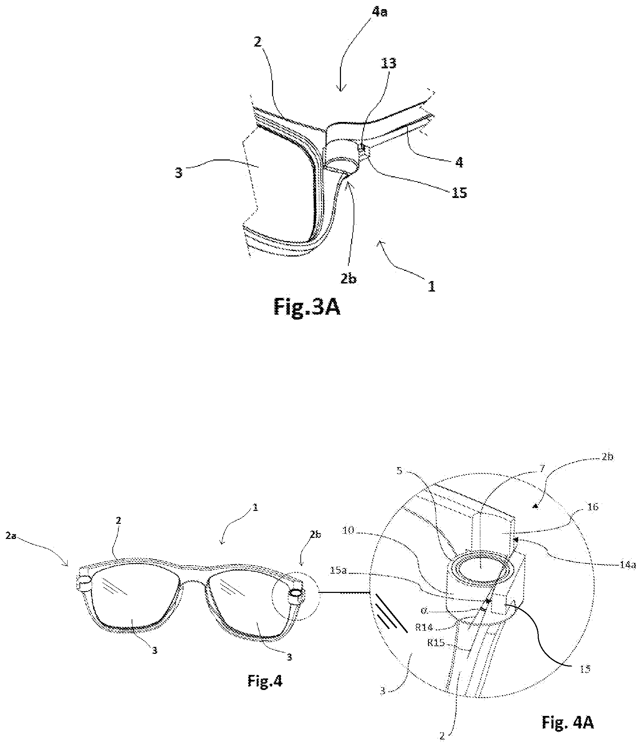

In other words, the pair of forces generated in the contact of the above-mentioned stop elements 12, 13 is such as to oppose a rotation of the bar 4 relative to the front frame 2 which goes beyond the condition of normal opening provided for the bar 4 and, in angular terms, substantially shown in Figure 3.

The first and second stop elements 12, 13, with the respective first and second contact elements 14, 15, define, in their entirety, for the frame 1, means for limiting the reciprocal rotation of the first and second magnetic members 5, 6.

As illustrated in Figure 4a, the first contact element 14 and the second contact element 15 have respective flat contact surfaces 14a, 15a whose planes intersect, forming an angle α.

Again with reference to Figure 4a, the above-mentioned planes are represented by two respective straight lines R14, R15 which represent the tracks relative to a top plan view.

The angle α formed by the two planes and represented by the two straight lines R14 and R15 is advantageously between 0 sexagesimal degrees and 25 sexagesimal degrees.

Still more advantageously, the angle α is between 5 sexagesimal degrees and 15 sexagesimal degrees.

According to an optimum embodiment, the angle α is approximately 10 sexagesimal degrees.

The above-mentioned values of the angle α have been found experimentally to be optimum for the purpose of an effective detachment of the bar 4 from the front frame 2 following a stress on the bar 4.

The above-mentioned first magnetic member 5 and second magnetic member 6, together with the relative means for limiting the reciprocal rotation, define, for the frame 1 means for connecting the bars 4 to the front frame 2, configured to allow the bars 4 to rotate relative to the front frame 2 at least between a first open position wherein the bars 4 are designed to rest on the ears of a user for wearing the eyeglasses, and a second closed position wherein the bars 4 are folded close to the front frame 2 to reduce the overall dimensions of the frame 1. As illustrated in Figure 5a, a portion of the above-mentioned outer wall 11b with a cylindrical shape and coaxial with the inner cylindrical cavity 11a defines a first convex cylindrical portion designed to engage with a second concave cylindrical portion 16 made, on the other hand, in the frame 2, at each relative lateral end 2a, 2b.

Once the bar 4 is mounted on the front frame 2, the first and second cylindrical portions 11b, 16 are coaxial with each other and are configured to engage by sliding during the movement of the bars 4 between their first open position and second closed position.

The above-mentioned first and second concave and convex cylindrical portions 11b, 16 together define, for the frame 1, means for guiding the reciprocal rotation of the bar 4 relative to the front frame 2.

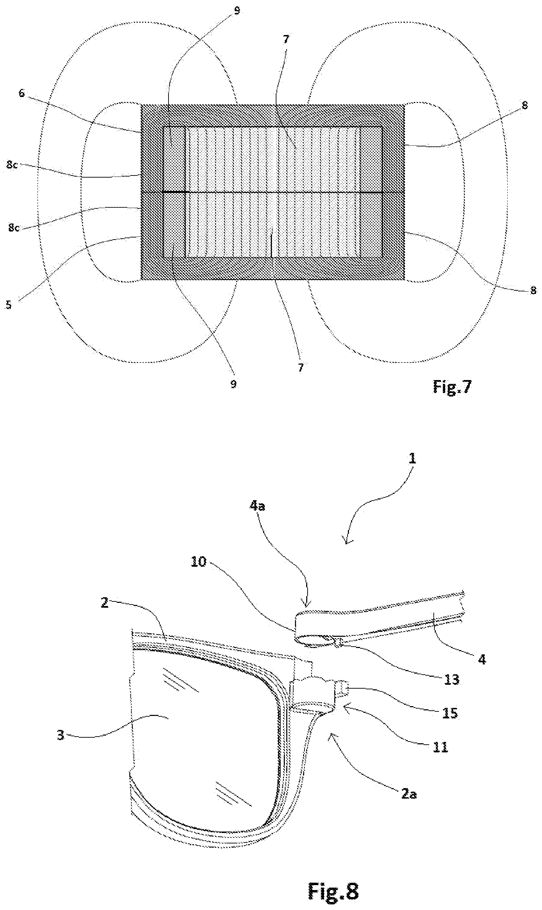

With reference to the variant embodiment illustrated in Figure 8, in it the first and second cylindrical seats 10, 11 for housing the respective magnetic members 5, 6 are shaped in the form of cylindrical cams in such a way as to provide a predetermined resistance in specific angles during the relative rotation of the bar 4 relative to the front frame 2.

This resistance is offered by the magnetic attraction force exerted between the two magnetic members 5, 6 which oppose their movement away induced by the protrusions present on the cylindrical cam.

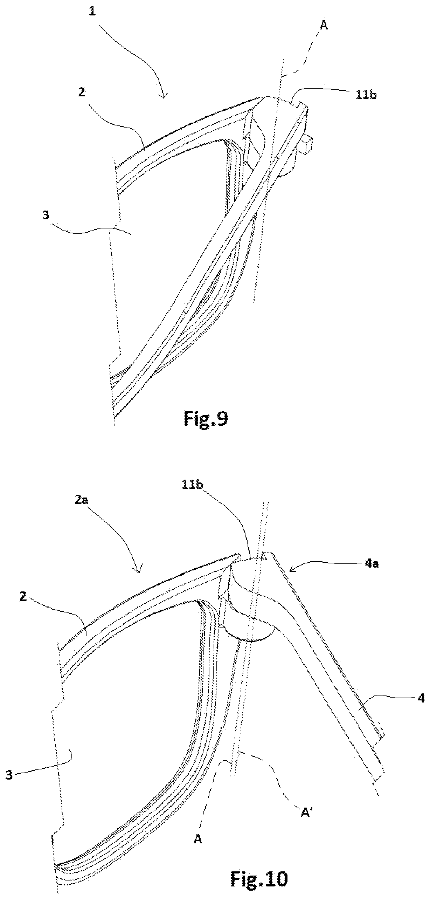

Figures 9 and 10 illustrate, in two different configurations of use, a further variant embodiment of the frame 1 according to the invention. In this variant embodiment, the outer wall 11b does not have a cylindrical shape but has a lateral cam profile, in such a way as to form, in its sliding engagement on the second concave cylindrical portion 16, a momentarily limited offset between the respective axes A and A' of the magnetic members 5, 6.

This offset is opposed by the magnetic attraction exerted between the two magnetic members 5, 6 which, due to the particular shape, naturally tend to remain coaxial.

The above-mentioned actions described with reference to the embodiments of Figures 8 to 10 are designed to guarantee the maintaining of stable positions for opening/closing the bars 4 relative to the frame 2.

In use, the frame 1 of the eyeglasses according to the invention allows practical and effective connection between the bars 4 and the front frame 2.

Figure 6 schematically shows the trend of the magnetic field which is created between two generic permanent magnets A, B of known type with their opposite facing poles.

Figure 7 schematically shows the trend of the magnetic field which is established between two magnetic members 5, 6 according to the invention, with their opposite poles facing each other and with also the outer capsules 8, made of material with a high magnetic permeability, substantially in contact with the respective circumferential end edges 8c.

It has been seen experimentally that thanks to the architecture of the magnetic members 5, 6 and their specific mode of interaction, the resulting magnetic field, as illustrated in Figure 7, is particularly efficient in guaranteeing an effective magnetic attraction force between the two magnetic members 5, 6 and consequently between the front frame 2 and the two bars 4 connected to it.

More specifically, the resulting magnetic field, as illustrated schematically in Figure 7, appears very concentrated in the area occupied by the two cylindrical magnetic members 5, 6, thus limiting dispersion to the outside of them, as happens in the prior art case illustrated in Figure 6.

The presence, in the magnetic field of Figure 6, of numerous flow lines outside the magnetic cores implies a sort of relative dispersion, unlike that which occurs in the configuration according to the invention, illustrated in Figure 7. In the latter, the concentration of the flow lines inside the space occupied by the magnetic members 5, 6 results in a better use of the magnetic field generated by the two magnetic members 5, 6, with an effective maintaining of a sort of "pivoted" configuration between the bars 4 and the front frame 2, almost as if there were a mechanical hinge.

In order to achieve the above-mentioned optimum concentration of the magnetic field "inside" the space occupied by the magnetic members 5, 6 it is important that there is a discontinuity between the inner core 7 and the outer capsule 8, in particular with reference to the lateral cylindrical surface of separation between the two parts.

This discontinuity may be occupied, entirely or partly, by the sleeve 9, irrespective of whether the latter is made of plastic material or is defined by the adhesive used for stably fixing the inner cores 7 to the respective outer capsules 8.

The eyeglasses frame 1 according to the invention therefore overcomes the above-mentioned drawbacks and brings important advantages.

It has been found experimentally that the thickness of the above-mentioned discontinuity does not exert an adequate screening action either when it is too small or when it is very high.

A first advantage linked to the frame of the eyeglasses according to the invention is due to the fact that, thanks to the above-mentioned particular architecture and arrangement of the magnetic members it has been possible to obtain a stable connection without the need to increase the dimensions of the magnetic members used. A further advantage linked to the invention is due to the fact that, thanks to the covering sleeve applied to the inner cylindrical core made of ferromagnetic material, the life of the latter is considerably increased, even more so if the core is made of neodymium. A further advantage linked to the invention is due to the fact that the two inner cores made of ferromagnetic material of each "hinge" are suitably spaced from each other in such a way as not to generate rubbing or even simply impacts during their reciprocal movements.

It has been found experimentally that the distances claimed and described are optimum since they create the best compromise between, on the one hand, the need to keep the cores detached in order to protect them against impacts and rubbing, and, on the other hand, the need to have a good vicinity so as not to adversely affect the magnetic attraction between the two cores.

A further advantage linked to the invention is the optimum reciprocal angle of the flat contact surfaces 14a, 15a of the first and second contact elements 14, 15. Thanks to this ideal inclination, the resistance to detachment of the bar 4 is optimised when the bar 4 engages the respective first stop element 12 and second stop element 13 in these contact elements.

In other words, thanks to the above-mentioned optimum inclination there is an effective retaining of the bar at the detachment but it allows the detachment when the force acting could determine irreversible damage of the parts.

In short, the bar 4 is stably connected to the frame but if the force applied is excessive then it is detached in such a way as not to damage the frame.

Yet another advantage of the eyeglasses frame according to the invention is due to the particular magnetic field being concentrated in the axial zone of the magnetic members and limiting its effectiveness substantially in the axial extension of the cores does not exert particular attraction against metal parts which could come into contact with the frame itself.

Indeed, it is possible to place the eyeglasses frame in a bag where there are metallic objects such as keys, coins etc., and thanks to the eyeglass frame solution according to the invention these objects will not be effectively attracted by the magnetic members located between the front frame and the bars.

## Claims

1. An eyeglasses frame, comprising:
- a front frame (2) for supporting two optical lenses (3),
- two bars (4) each positioned at a side end (2a, 2b) of said frame (2),
- means for connecting said bars (4) to said front frame (2), configured to allow said bars (4) to move rotatably relative to said front frame (2) at least between a first open position wherein said bars (4) are designed to rest on the ears of a user for wearing the eyeglasses frame, and a second closed position wherein said bars (4) are folded close to said front frame (2) for reducing the overall dimensions of the frame, said connecting means comprising for each bar (4) a respective first magnetic member (5) integral with said front frame (2) and a respective second magnetic member (6) integral with the bar (4) itself, said first and second magnetic members (5, 6) being designed to engage with each other to guarantee the rotatable connection of said bars (4) to said front frame (2), **characterised in that** each of said first and second magnetic member (5, 6) comprises an inner cylindrical core (7) made of ferromagnetic material and an outer capsule (8) containing said inner core (7), said outer capsule being fitted to said frame and bars; said outer capsule having a cylindrical wall extending from a first extremity to an opposite second extremity of said capsule and a bottom wall (8a) closing said cylindrical wall at said first extremity whilst said capsule remains open at said second extremity; said outer capsule (8) being made of material with high magnetic permeability and wherein said inner cores (7) of said first and second magnetic member (5, 6) are positioned in use, at a distance of between 0.01 mm and 0.6 mm from each other.

2. The frame according to claim 1, wherein each of said bars (4) comprises a cylindrical recess (11) for receiving said outer capsule (8) of said second magnetic member (6); said outer capsule of said second magnetic member having a first extremity and a second extremity opposite to said first extremity; said first extremity being wholly covered by the material of said bar whilst said second extremity is exposed by not being covered by the material of said bar; and said front frame (2) comprises a further cylindrical recess (10) for receiving said outer capsule (8) of said first magnetic member (5); said outer capsule (8) of said first magnetic member (5) having a first extremity and a second extremity opposite to said first extremity; said first extremity being wholly covered by the material of said frame (2) whilst said second extremity is exposed by not being covered by the material of said frame (2); whereby said exposed portions overlap, in use, to allow said bar to remain connected to said front frame during rotation between said first open position and said second closed position.

3. The frame according to either claim 1 or claim 2, wherein each of said magnetic members comprise a protective covering sleeve (9) covering the respective inner cores.

4. The frame according to any one of the preceding claims, wherein said distance between said inner cores of said first and second magnetic members is between 0.05 mm and 0.4 mm; optionally said distance between said inner cores (7) of said first and second magnetic members is approximately 0.15 mm.

5. The frame according to any one of the preceding claims, wherein each of said first and second magnetic members (5, 6) comprises a sleeve (9) for covering said cylindrical inner core (7), said covering sleeve (9) being interposed between said cylindrical inner core (7) and said outer capsule (8); optionally wherein said covering sleeve is made of plastic material.

6. The frame according to any one of the preceding claims, wherein said outer capsule (8) is configured to coaxially contain, inside it, said inner cylindrical core (7), without the latter protruding in an axial direction beyond an end edge (8c) of said lateral cylindrical wall (8b).

7. The frame according to claim 6, wherein said end edge (8c) of the lateral cylindrical wall (8b) protrudes axially with respect to said inner cylindrical core (7).

8. The frame according to any one of the preceding claims, wherein said inner cylindrical core (7) made of ferromagnetic material is made of an alloy chosen from neodymium-iron- boron and samarium-cobalt.

9. The frame according to any one of the preceding claims, wherein said means for connecting said bars (4) to said front frame (2) comprise means for limiting the reciprocal rotation of the first magnetic member (5) and second magnetic member (6), wherein said rotation limiting means comprise a first stop element (15) protruding away from said front frame and in substantially the direction of a wearer's ear; said bar comprising a second stop element (13) protruding down from said bar and configured to engage in contact with said first stop element (15) when the bars are rotated into their substantially fully open position.

10. The frame according to claim 9, wherein said front frame comprises a third stop (14) extending upwards from said front frame and said bar comprises a fourth stop (12) projecting forward from said axial direction of said bar; whereby said third and fourth stop engage one another when said bars are rotated into their substantially fully open position.

11. The frame according to claim 10, wherein said fourth stop element (12) projects from said bar (4) tangentially relative to a cylindrical surface coaxial with said inner cylindrical core (7) of said second magnetic member (6).

12. The frame according to claim 9, wherein said second stop element (13) protrudes downwards from said bar (4) in the direction of the axis of said inner cylindrical core of said second magnetic member (6), beyond the dimensions of said outer containment capsule (8).

13. The frame according to claim 9, wherein first and second contact element (14, 15) have respective flat contact surfaces (14a, 15a) whose planes intersect each other to form an angle a, wherein the angle is between 0 sexagesimal degrees and 25 sexagesimal degrees.

14. The frame according to any one of the preceding claims, wherein each of said bars comprises a first convex cylindrical portion and said front frame comprises a second concave cylindrical portion (16), said first and second cylindrical portions being coaxial with each other and configured to slide during the movement of said bars from their said first open position and their said second closed position and vice versa.

## Patentansprüche

1. Brillengestell, umfassend:
- einen Vorderrahmen (2) zum Halten von zwei optischen Linsen (3),
- zwei Bügel (4), die jeweils an einem Seitenende (2a, 2b) des Gestells (2) angeordnet sind,
- Mittel zum Verbinden der Bügeln (4) mit dem Vorderrahmen (2), die so ausgebildet sind, dass sich die Bügel (4) relativ zum Vorderrahmen (2) drehbar bewegen können, zumindest zwischen einer ersten offenen Position, in der die Bügel (4) dazu ausgelegt sind, auf den Ohren eines Benutzers aufzuliegen, um das Brillengestell zu tragen, und einer zweiten geschlossenen Position, in der die Bügel (4) nahe an den Vorderrahmen (2) geklappt sind, um die Gesamtabmessungen des Gestells zu verringern, wobei die Verbindungsmittel für jeden Bügel (4) ein jeweiliges erstes Magnetelement (5), das einstückig mit dem Vorderrahmen (2) ausgebildet ist, und ein jeweiliges zweites Magnetelement (6) umfassen, das einstückig mit dem Bügel (4) selbst ausgebildet ist, wobei das erste und zweite Magnetelement (5, 6) so ausgebildet sind, dass sie ineinander greifen, um die drehbare Verbindung der Bügel (4) mit dem Vorderrahmen (2) zu gewährleisten, **dadurch gekennzeichnet, dass** sowohl das erste als auch das zweite Magnetelement (5, 6) einen inneren zylindrischen Kern (7) aus ferromagnetischem Material und eine diesen inneren Kern umschließende äußere Hülle (8) aufweisen, wobei die äußere Kapsel an dem Gestell und den Bügeln angebracht ist; wobei die äußere Kapsel eine zylindrische Wand aufweist, die sich von einem ersten Ende zu einem gegenüberliegenden zweiten Ende der Kapsel und eine Bodenwand (8a) aufweist, die die zylindrische Wand am ersten Ende verschließt, während die Kapsel am zweiten Ende offen bleibt; wobei die äußere Kapsel (8) aus einem Material mit hoher magnetischer Permeabilität besteht und worin die inneren Kerne (7) des ersten und des zweiten Magnetelements (5, 6) im Einsatz in einem Abstand von zwischen 0,01 mm und 0,6 mm voneinander angeordnet sind.

2. Gestell nach Anspruch 1, wobei jede der Bügel (4) eine zylindrische Aussparung zur Aufnahme der äußeren Kapsel (8) des zweiten Magnetelements (6) aufweist; wobei die äußere Kapsel des zweiten Magnetelements ein erstes Ende und ein dem ersten Ende gegenüberliegendes zweites Ende aufweist; wobei das erste Ende vollständig vom Material des Bügels bedeckt ist, während das zweite Ende freiliegt, da es nicht vom Material des Bügels bedeckt ist; und wobei der Vorderrahmen (2) eine weitere zylindrische Aussparung (10) zur Aufnahme der äußeren Kapsel (8) des ersten Magnetelements (5) aufweist; wobei die äußere Kapsel (8) des ersten Magnetelements (5) ein erstes Ende und ein dem ersten Ende gegenüberliegendes zweites Ende aufweist; wobei das erste Ende vollständig vom Material des Gestells (2) bedeckt ist, während das zweite Ende freiliegt, da es nicht vom Material des Gestells (2) bedeckt ist; wodurch sich die freiliegenden Abschnitte im Gebrauch überlappen, damit der Bügel während der Drehung zwischen der ersten offenen Position und der zweiten geschlossenen Position mit dem Vorderrahmen verbunden bleibt.

3. Gestell gemäß Anspruch 1 oder Anspruch 2, wobei jedes der magnetischen Elemente eine schützende Abdeckhülse (9) umfasst, die die jeweiligen inneren Kerne abdeckt.

4. Gestell gemäß einem der vorstehenden Ansprüche, wobei der Abstand zwischen den inneren Kernen des ersten und zweiten Magnetelements zwischen 0,05 mm und 0,4 mm beträgt; wobei der Abstand zwischen den inneren Kernen (7) des ersten und des zweiten Magnetelements optional etwa 0,15 mm beträgt.

5. Gestell gemäß einem der vorstehenden Ansprüche, wobei jedes der ersten und zweiten Magnetelemente (5, 6) eine Hülse (9) zum Abdecken des zylindrischen Innenkerns (7) umfasst, wobei die Abdeckhülse (9) zwischen dem zylindrischen Innenkern (7) und der Außenkapsel (8) angeordnet ist; wobei die Abdeckhülse optional aus Kunststoffmaterial besteht.

6. Gestell gemäß einem der vorstehenden Ansprüche, wobei die äußere Kapsel (8) so ausgebildet ist, dass sie den zylindrischen Innenkern (7) koaxial in ihrem Inneren aufnimmt, ohne dass dieser in axialer Richtung über eine Endkante (8c) der seitlichen zylindrischen Wand (8b) hinausragt.

7. Gestell nach Anspruch 6, wobei die Endkante (8c) der seitlichen zylindrischen Wand (8b) in axialer Richtung in Bezug auf den inneren zylindrischen Kern (7) vorsteht.

8. Gestell nach einem der vorstehenden Ansprüche, wobei der aus ferromagnetischem Material bestehende innere zylindrische Kern (7) aus einer Legierung besteht, die aus Neodym-Eisen-Bor und Samarium-Kobalt ausgewählt ist.

9. Gestell gemäß einem der vorstehenden Ansprüche, wobei die Mittel zum Verbinden der Bügel (4) mit dem Vorderrahmen (2) Mittel zum Begrenzen der gegenseitigen Drehung des ersten Magnetelements (5) und des zweiten Magnetelements (6) umfassen, wobei die Drehbegrenzungsmittel ein erstes Anschlagelement (15) umfassen, das von dem Vorderrahmen weg und im Wesentlichen in Richtung des Ohrs eines Trägers vorsteht; wobei der Bügel ein zweites Anschlagelement (13) umfasst, das von dem Bügel nach unten vorsteht und so ausgebildet ist, dass es mit dem ersten Anschlagelement (15) in Kontakt einrast, wenn die Bügel in ihre im Wesentlichen vollständig geöffnete Position gedreht werden.

10. Gestell gemäß Anspruch 9, wobei der Vorderrahmen einen dritten Anschlag (14) umfasst, der sich vom Vorderrahmen nach oben erstreckt, und der Bügel einen vierten Anschlag (12) umfasst, der aus der axialen Richtung des Bügels nach vorne vorsteht; wobei der dritte und der vierte Anschlag ineinander greifen, wenn die Bügeln in ihre im Wesentlichen vollständig geöffnete Position gedreht werden.

11. Gestell gemäß Anspruch 10, wobei das vierte Anschlagelement (12) von dem Bügel (4) tangential zu einer zylindrischen Oberfläche vorsteht, die koaxial zu dem inneren zylindrischen Kern (7) des zweiten Magnetelements (6) ist.

12. Gestell gemäß Anspruch 9, wobei das zweite Anschlagelement (13) von dem Bügel (4) in Richtung der Achse des inneren zylindrischen Kerns des zweiten Magnetelements (6) über die Abmessungen der äußeren Umhüllungskapsel (8) hinaus nach unten vorsteht.

13. Gestell nach Anspruch 9, wobei das erste und zweite Kontaktelement (14, 15) jeweilige flache Kontaktflächen (14a, 15a) aufweisen, deren Ebenen sich schneiden und einen Winkel a bilden, worin der Winkel zwischen 0 Sexagesimalgraden und 25 Sexagesimalgraden liegt.

14. Gestell gemäß einem der vorstehenden Ansprüche, wobei jede der Bügeln einen ersten konvexen zylindrischen Abschnitt aufweist und der Vorderrahmen einen zweiten konkaven zylindrischen Abschnitt (16) aufweist, wobei der erste und zweite zylindrische Abschnitt koaxial zueinander angeordnet und so ausgebildet sind, dass sie während der Bewegung der Bügel von ihrer ersten offenen Position und ihre zweite geschlossene Position und umgekehrt gleiten.

## Revendications

1. Monture de lunettes, comprenant :
- une monture avant (2) destinée à supporter deux verres optiques (3),
- deux barres (4) positionnées chacune à une extrémité latérale (2a, 2b) de ladite monture (2),
- des moyens pour relier lesdites barres (4) à ladite monture avant (2), configurés pour permettre auxdites barres (4) de se déplacer de manière rotative par rapport à ladite monture avant (2) au moins entre une première position ouverte dans laquelle lesdites barres (4) sont conçues pour reposer sur les oreilles d'un utilisateur afin de porter la monture de lunettes, et une deuxième position fermée dans laquelle lesdites barres (4) sont repliées près de ladite monture avant (2) pour réduire les dimensions globales de la monture, lesdits moyens de liaison comprenant, pour chaque barre (4), un premier élément magnétique (5) respectif solidaire de ladite monture avant (2) et un deuxième élément magnétique (6) respectif solidaire de la barre (4) elle-même, lesdits premier et deuxième éléments magnétiques (5, 6) étant conçus pour s'emboîter afin de garantir la liaison pivotante desdites barres (4) à ladite monture avant (2), **caractérisée en ce que** chacun desdits premier et deuxième éléments magnétiques (5, 6) comprend un noyau cylindrique intérieur (7) en matériau ferromagnétique et une capsule extérieure (8) contenant ledit noyau intérieur (7), ladite capsule extérieure étant montée sur ladite monture et lesdites barres ; ladite capsule extérieure présentant une paroi cylindrique s'étendant d'une première extrémité à une deuxième extrémité opposée de ladite capsule et une paroi de fond (8a) fermant ladite paroi cylindrique à ladite première extrémité tandis que ladite capsule reste ouverte à ladite deuxième extrémité ; ladite capsule extérieure (8) étant réalisée en un matériau à haute perméabilité magnétique et dans laquelle lesdits noyaux intérieurs (7) desdits premier et deuxième éléments magnétiques (5, 6) sont positionnés, en utilisation, à une distance comprise entre 0,01 mm et 0,6 mm l'un de l'autre.

2. Monture selon la revendication 1, dans laquelle chacune desdites barres (4) comprend un évidement cylindrique destiné à recevoir ladite capsule extérieure (8) dudit deuxième élément magnétique (6) ; ladite capsule extérieure dudit deuxième élément magnétique ayant une première extrémité et une deuxième extrémité opposée à ladite première extrémité ; ladite première extrémité étant entièrement recouverte par le matériau de ladite barre tandis que ladite deuxième extrémité est exposée en n'étant pas recouverte par le matériau de ladite barre ; et ladite monture avant (2) comprend un autre évidement cylindrique (10) destiné à recevoir ladite capsule extérieure (8) dudit premier élément magnétique (5) ; ladite capsule extérieure (8) dudit premier élément magnétique (5) comportant une première extrémité et une deuxième extrémité opposée à ladite première extrémité ; ladite première extrémité étant entièrement recouverte par le matériau de ladite monture (2) tandis que ladite deuxième extrémité est exposée en n'étant pas recouverte par le matériau de ladite monture (2) ; de sorte que lesdites parties exposées se chevauchent, en utilisation, pour permettre à ladite barre de rester reliée à ladite monture avant pendant la rotation entre ladite première position ouverte et ladite deuxième position fermée.

3. Monture selon la revendication 1 ou la revendication 2, dans laquelle chacun desdits éléments magnétiques comprend un manchon de recouvrement protectif (9) recouvrant les noyaux intérieurs respectifs.

4. Monture selon l'une quelconque des revendications précédentes, dans laquelle ladite distance entre lesdits noyaux intérieurs desdits premier et deuxième éléments magnétiques est comprise entre 0,05 mm et 0,4 mm ; éventuellement, ladite distance entre lesdits noyaux intérieurs (7) desdits premier et deuxième éléments magnétiques est d'environ 0,15 mm.

5. Monture selon l'une quelconque des revendications précédentes, dans laquelle chacun desdits premier et deuxième éléments magnétiques (5, 6) comprend un manchon (9) destiné à recouvrir ledit noyau intérieur cylindrique (7), ledit manchon de recouvrement (9) étant intercalé entre ledit noyau intérieur cylindrique (7) et ladite capsule extérieure (8) ; éventuellement, dans laquelle ledit manchon de recouvrement est réalisé en matière plastique.

6. Monture selon l'une quelconque des revendications précédentes, dans laquelle ladite capsule extérieure (8) est configurée pour contenir coaxialement, en son sein, ledit noyau cylindrique intérieur (7), sans que ce dernier ne fasse saillie axialement au-delà d'un bord d'extrémité (8c) de ladite paroi cylindrique latérale (8b).

7. Monture selon la revendication 6, dans laquelle ledit bord d'extrémité (8c) de la paroi cylindrique latérale (8b) fait saillie axialement par rapport audit noyau cylindrique intérieur (7).

8. Monture selon l'une quelconque des revendications précédentes, dans laquelle ledit noyau cylindrique intérieur (7) en matériau ferromagnétique est constitué d'un alliage choisi parmi néodyme-fer-bore et samarium-cobalt.

9. Monture selon l'une quelconque des revendications précédentes, dans laquelle lesdits moyens pour relier lesdites barres (4) à ladite monture avant (2) comprennent des moyens pour limiter la rotation réciproque du premier élément magnétique (5) et du deuxième élément magnétique (6), dans laquelle lesdits moyens de limitation de rotation comprennent un premier élément de butée (15) faisant saillie à partir de ladite monture avant et sensiblement dans la direction de l'oreille d'un utilisateur ; ladite barre comprenant un deuxième élément de butée (13) faisant saillie vers le bas à partir de ladite barre et configuré pour s'engager avec ledit premier élément de butée (15) lorsque les barres sont tournées dans leur position sensiblement complètement ouverte.

10. Monture selon la revendication 9, dans laquelle ladite monture avant comprend une troisième butée (14) s'étendant vers le haut à partir de ladite monture avant et ladite barre comprend une quatrième butée (12) faisant saillie vers l'avant à partir de ladite direction axiale de ladite barre ; de sorte que lesdites troisièmes et quatrièmes butées s'emboîtent lorsque lesdites barres sont tournées dans leur position sensiblement complètement ouverte.

11. Monture selon la revendication 10, dans laquelle ledit quatrième élément de butée (12) fait saillie à partir de ladite barre (4) de manière tangentielle par rapport à une surface cylindrique coaxiale audit noyau cylindrique intérieur (7) dudit deuxième élément magnétique (6).

12. Monture selon la revendication 9, dans laquelle ledit deuxième élément de butée (13) fait saillie vers le bas à partir de ladite barre (4) dans la direction de l'axe dudit noyau cylindrique intérieur dudit deuxième élément magnétique (6), au-delà des dimensions de ladite capsule de confinement extérieure (8).

13. Monture selon la revendication 9, dans laquelle les premier et deuxièmes éléments de contact (14, 15) présentent des surfaces de contact planes respectives (14a, 15a) dont les plans se coupent pour former un angle a, ledit angle étant compris entre 0 degré sexagésimal et 25 degrés sexagésimaux.

14. Monture selon l'une quelconque des revendications précédentes, dans laquelle chacune desdites barres comprend une première partie cylindrique convexe et ladite monture avant comprend une deuxième partie cylindrique concave (16), lesdites premières et deuxièmes parties cylindriques étant coaxiales l'une par rapport à l'autre et configurées pour coulisser pendant le mouvement desdites barres entre leur première position ouverte et leur deuxième position fermée, et vice versa.
